# EUROPEAN PATENT APPLICATION

(11) **EP 0 757 075 A2**
(43) Date of publication of application: **05.02.1997**
(21) Application number: 96305589.2
(22) Date of filing: 30.07.1996
(51) Int. Cl.: C08K 5/3492

(54) **Polyaminotriazine composition**

(30) Priority: 31.07.1995 JP 194496/95
(71) Applicant: SUMITOMO CHEMICAL COMPANY, LIMITED, Chuo-ku, Osaka 305 (JP)
(72) Inventor: Kimura, Kenji, Ibaraki-shi, Osaka (JP); Tanaka, Shinya, Toyonou-cho, Toyonou-gun, Osaka (JP)
(74) Representative: Cresswell, Thomas Anthony

(57) **Abstract**

A composition comprising a polyaminotriazine represented by the following formula(I): 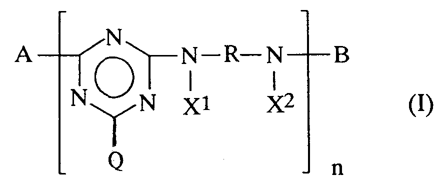
wherein A represents an end group selected from a group represented by the following formula: 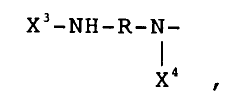
halogen, etc.,
B represents hydrogen or an end group,
n represents a number of from 2 to 20,
R represents an alkylene group or a divalent alicyclic group,
X¹, X², X³ and X⁴ represents hydrogen or a piperidyl group,
Q is a group represented by formula of -OR³ or-NR⁴R⁵ in which R³, R⁴ and R⁵ represents an alkyl group, etc., and halogen in an amount of 1000mg or less of per 1 kg of the composition.

## Description

The present invention relates to a composition mainly comprising polyaminotriazine useful as an additive to organic materials, in particular as a weather stabilizer for synthetic resins. In more detail, the present invention relates to a composition comprising a polyaminotriazine represented by the following formula (I) as its main ingredient (hereinafter referred to as polyaminotriazine composition of formula (I)): 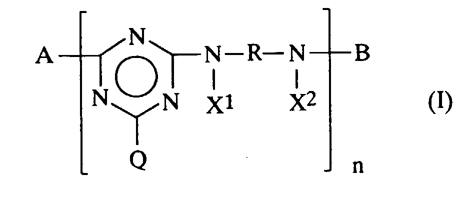 wherein A represents an end group selected from a group represented by the following formula: 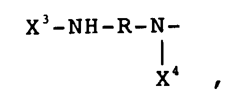 halogen,
a group represented by Q which is defined below, or a hydroxyl group;
B represents hydrogen or
   an end group represented by one of the following formulae: 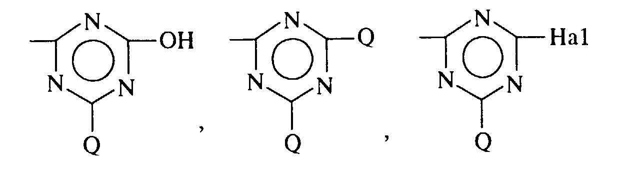 wherein
Hal represents halogen;
n represents a number of from 2 to 20;
X¹, X², X³ and X⁴ each independently represents hydrogen or a piperidyl group represented by the following formula (Ia): 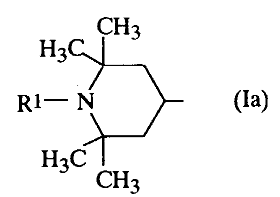 wherein
R¹ represents hydrogen, a hydroxyl group, an alkyl group having 1-12 carbon atoms, an alkoxy group having 1-18 carbon atoms, an alkenyl group having 3-8 carbon atoms, an arylalkyl group having 7-11 carbon atoms or an alkenyloxy group having 3-5 carbon atoms, provided that at least 75 mol % of X¹, X², X³ and X⁴ is the piperidyl group but not all of X¹, X², X³ and X⁴ is the piperidyl group;
R represents an alkylene group having 2-12 carbon atoms which may be interrupted with -O- or -NR²- in which R² represents hydrogen, an alkyl group having 1-12 carbon atoms, a cycloalkyl group having 3-12 carbon atoms or a piperidyl group of the above-mentioned formula(Ia), or
R represents a divalent alicyclic group having 6-15 carbon atoms; and
Q is a group represented by formula of -OR³ or-NR⁴R⁵ in which
R³ represents an alkyl group having 1-12 carbon atoms, a cycloalkyl group having 5-12 carbon atoms, benzil, phenyl, tolyl or a piperidyl group of the above-mentioned formula(Ia),
R⁴ represents an alkyl group having 1-12 carbon atoms, cyclohexyl, and
R⁵ represents an alkyl group having 1-12 carbon atoms, an alkoxyalkyl group having 3-12 carbon atoms in total, an N,N-dialkylaminoalkyl group having 4-12 carbon atoms in total, an alkenyl group having 3-5 carbon atoms, cyclohexyl, benzyl, phenyl, tolyl or a piperidyl group of the above-mentioned formula(Ia), or
R⁴ and R⁵, together with the nitrogen atom to which they are connected, form a heterocyclic ring (generally 5-, 6- or 7- membered) which may contain -O- or -NH-, for example morpholino.

It is known that organic materials such as synthetic resins including polyethylene and polypropylene are degraded by some conditions of environment such as sun light or rain, and their physical properties lower accompanied with phenomena such as softening, embrittlement and color change. In order to prevent such degradation, various kind of weather stabilizer have been used. Polyaminotriazine of above-mentioned formula(I) is known as such weather stabilizer. In JP-A-52-71486(=USP 4,086,204), some polyaminotriazines of the above-mentioned formula(I) are described as weather stabilizers.

In late years, in order to satisfy the rising requirement level about weatherability of synthetic resin, the development of a weather stabilizer having higher performance has been desired. An object of the present invention is to improve weatherability of polyaminotriazine composition of formula(I).

Present inventors have conducted extensive studies on weatherability of organic materials such as synthetic resins in which the polyaminotriazine composition of formula(I) is compounded. And, as a result, they have found that amount of halogen contained in the polyaminotriazine composition influences the weatherability greatly, and, by using a polyaminotriazine composition of formula(I) in which the halogen content is reduced to a specific amount or lower, the weatherability of the organic material improved conspicuously. Thus, the present invention completed.

The present invention provides a composition comprising a polyaminotriazine of formula (I) as the main ingredient which composition contains halogen in an amount of 1000 mg or less per 1 kg of the composition. The composition of the present invention usually comprises a polyaminotriazine of formula (I) in an amount of more than 500g, and particularly more than 900g per 1kg of the composition.

The characteristic of polyaminotriazine composition of the present invention resides in that the content of halogen contained in the composition, which is mainly originated from its starting materials, is 1000mg or less per 1 kg of the composition. It was found that a polyaminotriazine composition having the halogen content of 1000mg or less per 1 kg of the composition gives conspicuously superior weatherability to an organic material when it was compounded in the organic material compared to a polyaminotriazine composition containing more than 1000mg of halogen does. The halogen mentioned here is fluorine, chlorine, bromine or iodine, and includes any halogen, which can be detected by elemental analyses, contained in the polyaminotriazine composition. That is it may be contained either in a form of organic compound or in a form of inorganic compound. Considering the starting materials, the halogen is typically chlorine.

Arylalkyl represented by R1 in the formula(Ia) is typically phenylalkyl. Divalent alicyclic group represented by R in the formula(I) may be a group having a cycloalkane ring which may be substituted by alkyl as long as the total carbon atom number is within the range defined above. Examples of the group having a cycloalkane ring includes cycloalkylene, methylenedicycloalkylene and cycloalkylene methylene.

Among the polyaminotriazine represented by the formula(I), those in which R is a straight chain or branched alkylene having 4-12 carbon atoms are preferred, and those in which R is hexamethylene are particularly preferred. And, those in which Q is a group of -NHR⁵ wherein R⁵ is as defined above or morpholino are preferred, and particularly those in which Q is 1,1,3,3-tetramethylbutylamino are preferred. As for R¹, hydrogen or methyl is preferred.

Polyaminotriazine of formula(I) can be produced by reacting, for example, dihalotriazine represented by the following formula(II): 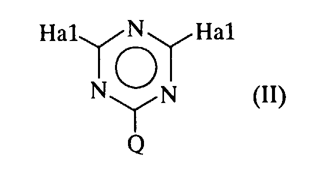 wherein Hal and Q are as defined above, and a mixed diamine which is represented by the following formula (III)

X-NH-R-NH-X⁵ (III)

wherein R is as defined above, X represents piperidyl of the above-mentioned formula(Ia) and X⁵ is hydrogen or piperidyl of the above-mentioned formula(Ia) and which is a mixture of those in which X⁵ is hydrogen and those in which X⁵ is piperidyl of the above-mentioned formula(Ia).

Dihalotriazine of the formula(II) which is one of the starting material can be produced according to a known method, for example, a method described JP-A- 52-71486(=USP 4,086,204). More concretely, it can be produced from cyanuric halide and a monovalent compound of formula QH wherein Q is as defined above. Resulting solution obtained by the reaction can be used as it is, i.e. without isolation of dihalotriazine of formula (IT) for producing polyaminotriazine of formula(I). Dihalotriazine of the formula(II) may be used after isolated from the resulting reaction solution by a known method such as recrystallization.

Among dihalotriazine of the formula(II), those wherein Q is -NR⁴R⁵ in which R⁴ is hydrogen and R⁵ is straight chain or branched alkyl having 4-8 carbon atoms or R4 and R⁵ form a morpholine ring together with the nitrogen atom are useful. Halogen represented by Hal in formula(II) may be fluorine, chlorine, bromine or iodine, but, among dihalotriazine of the formula(II), dichlorotriazine is particularly useful for the production. Preferred examples of the dichlorotriazine of formula (II) include 2,4-dichloro-6-(1,1,3,3-tetramethylbutylamino)-1,3,5-triazine and 2,4-dichloro-6- morpholino-1,3,5-triazine.

Diamine of formula(III), another starting material, can be produced by a known method, which, for example, by a method described in JP-A-1-50858 (=EP-A-302,020). More concretely, it can be produced by a hydrogenation amination reaction of tetramethyl piperidone represented by the following formula (IIIa): 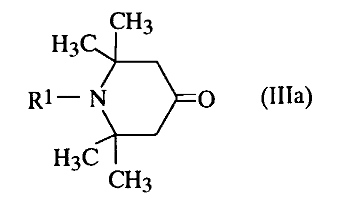 wherein R¹ is as defined above
and an alkylenediamine represented by the following formula(IIIb):

NH₂-R-NH₂ (IIIb)

wherein R is as defined above.

The amount of the tetramethyl piperidone of formula(IIIa) used in the above-mentioned reaction is preferably 2 mol or less, more preferably 1.5 mol or more and less than 2 mol, per 1 mol of alkylenediamine of formula (IIIb). By adjusting the mole ratio within the above-mentioned range, the mixed diamine, i.e. a mixture of diamine of formula(III) wherein X⁵ is piperidyl of formula(Ia) and diamine of formula(III) wherein X⁵ is hydrogen can be obtained. It is preferred that the resulting reaction solution is used for the production of polyaminotriazine of formula(I) without isolation of the mixed diamine of formula(III). By doing so, polyaminotriazine of the formula(I) wherein a part of X¹, X², X³ and X⁴ is hydrogen can be manufactured efficiently by one series of continuous steps from starting materials represented by the formula (IIIa) and formula (IIIb) as a high grade product without coloration.

Even when tetramethylpiperidone of formula (IIIa) is refined by method such as distillation or recrystallization was used, the reaction product may contain a small amount of byproduct such as N-(isopropyl)-N'-(2,2,6,6-tetramethyl-4-piperidyl) hexamethylenediamine. If the byproduct has a functional group which can react with the dihalotriazine of formula (II), it may become contained in polyaminotriazine of formula (I) as an unit. However, even if it is contained as an unit of the polyaminotriazine in such a small amount as that produced according to usual reaction conditions, weatherability given by polyaminotriazine composition of the present invention is not affected.

Among the diamine of formula(III), those wherein R is a straight chain or branched alkylene having 2-12 carbon atoms, particularly 4-12 carbon atoms, are preferred. Among the diamine of formula(III) in which X and/or X⁵ is piperidyl of formula(Ia), those wherein R¹ in formula(Ia) is hydrogen or methyl are preferred. Particularly preferred examples of the diamine of formula (III) include a mixture of N-(2,2,6,6-tetramethyl-4-piperidyl)hexamethylenediamine and N,N'-bis(2,2,6,6-tetramethyl-4-piperidyl)hexamethylenediamine, and a mixture of N-(1,2,2,6,6-pentamethyl-4-piperidyl)hexamethylenediamine and N,N'-bis(1,2,2,6,6-pentamethyl-4- piperidyl)hexamethylenediamine.

Polyaminotriazine composition of formula(I) can be produced from the above-mentioned starting materials according to a known method such as a method described in JP-A- 58-201820 (=USP 4,492,791). However, strictly obeying the known method, halogen originated from starting materials tends to remain in the resulting composition. More concretely, for example, when cyanuric chloride is used as the starting material, organic chlorine and/or inorganic chlorine tends to remain in the resulting composition. The appreciable amount of remaining halogen give bad influence on weatherability. In order to reduce the remaining halogen, it is preferred to adopt, for example,
a method which comprises adding a compound represented by the formula of QH, in which Q is as defined above, after the completion of main reaction, followed by continuing the reaction to react the compound of QH with halogen remaining unreacted on the triazine ring, or
a method of conducting wash with water thoroughly during after-treatment process of reaction. Any methods may be adopted in order to reduce a quantity of remaining halogen, but amount of remaining halogen in the polyaminotriazine composition of formula(I) must be reduced to 1000 mg or less per 1 kg of the composition. The amount of 500 mg or less per 1 kg of the composition is more preferred and further preferred is 400 mg or less.

According to the above-mentioned method, a polyaminotriazine composition which mainly comprised a mixture of various kinds of polyaminotriazine compound, all of which can be represented by the formula (I), is obtained. As defined above, the end group, A and B, may include halogen as long as the total amount of halogen in the composition is 1000 mg or less per 1 kg of the composition.

Examples of polyaminotriazine composition produced according to the above-mentioned method include: a composition which is a condensation polymerization product of a mixture of N-(2,2,6,6-tetramethyl-4-piperidyl)hexamethylenediamine and N,N'-bis(2,2,6,6-tetramethyl-4-piperidyl)hexamethylenediamine with 2,4-dichloro-6-(1,1,3,3-tetramethylbutylamino)-1,3,5-triazine, or a composition obtained by treating the condensation polymerization product with 1,1,3,3-tetramethylbutylamine;
a composition which is a condensation polymerization product of a mixture of N-(1,2,2,6,6- pentamethyl-4-piperidyl)hexamethylenediamine and N,N'-bis(1,2,2,6,6-pentamethyl-4-piperidyl)hexamethylenediamine with 2,4-dichloro-6-(1,1,3,3-tetramethylbutylamino)-1,3,5-triazine, or a composition obtained by treating the condensation polymerization product with 1,1,3,3-tetramethylbutylamine; and
a composition which is a condensation polymerization product of a mixture of N- (2,2,6,6-tetramethyl-4-piperidyl)hexamethylenediamine and N,N ' -bis(2,2,6,6-teteamethyl-4-piperidyl)hexamethylenediamine with 2,4-dichloro-6-morpholino-1,3,5- triazine, or a composition obtained by treating the condensation polymerization product with morpholine.

When the polyaminotriazine composition of formula(I) in which the remaining halogen was reduced is compounded in an organic material, it gives the organic material much better weatherability, which is evaluated after the organic material being exposed to outdoor atmosphere, than a polyaminotriazine composition of formula(I) containing large amount of remaining halogen. The less remaining halogen is, the better the result is.

As examples of the organic materials which can be stabilized using polyaminotriazine composition of the present invention, following can be mentioned, though the organic materials are not limited to the examples:
(1) Polyethylene such as low density polyethylene(LD-PE), high density
polyethylene(HD-PE), linear low density polyethylene (LLD-PE) (2) polypropylene
(3) Ethylene/propylene copolymer
(4) Methylpentene polymer
(5) EEA (ethylene/ethyl acrylate copolymer) resin
(6) EVA (ethylene/vinyl acetate copolymer) resin
(7) Ethylene / vinyl alcohol copolymer resin
(8) Polystyrenes such as polystyrene, poly(p-methylstyrene), poly(alpha methylstyrene)
(9) As (acrylonitrile/styrene copolymer) resin
(10) ABS (acrylonitrile/butadiene/styrene copolymer) resin
(11) AAS (acrylic elastomer/acrylonitrile/styrene copolymer) resin
(12) methacrylate resin
(13) Polyacetal
(14) Grafted polyphenylene ether resin and polyphenylene sulfide resin
(15) Polyurethane
(16) Polyamide
(17) Polyethyleneterephthalate, polybutyleneterephthalate
(18) Polycarbonate
(19) Polyacrylate
(20) Polysulfone, polyether ether ketone, polyether sulfone
(21) Aromatic polyester resin
(22) Epoxide resin
(23) Diallylphthalate pre-polymer
(24) Silicone resin
(25) Unsaturated polyester resin
(26) Acryl modified benzoguanamine resin
(27) Benzoguanamine/melamine resin
(28) UF resin
(29) Polybutadiene
(30) 1,2- polybutadiene
(31) Polyisoprene
(32) Styrene/butadiene copolymer
(33) Butadiene/acrylonitrile copolymer
(34) Silicone rubber
(35) Acrylic elastomer
(36) Natural rubber
(37) polyester resin paint
(38) urethane resin paint
(39) epoxy resin paint
(40) acrylic resin paint
(41) vinyl resin paint
(42) amino alkyd resin paint
(43) alkyd resin paint
(44) cellulose nitrate resin paint
(45) oil paint
(46) wax
(47) lube oil
and the like.

Among them, particularly suitable organic materials to be stabilized by composition of present invention are synthetic resins such as polyethylene including low density polyethylene (LD-PE), high density polyethylene (HD-PE) and linear low density polyethylene (LLD-PE), polypropylene, EVA resin, and ethylene/propylene copolymer.

The amount of the polyaminotriazine composition of present invention to be compounded in an organic material is usually within a range of from 0.01 to 5 part by weight per 100 part by weight of the organic material. If necessary, other additives such as phenol type anti oxidant, sulfur type anti oxidant, phosphorus type anti oxidant, ultraviolet absorber, hindered amine type light stabilizer except that represented by formula (I), lubricant, plasticizer, halogen type or phosphorus type flame retardant, nucleating agent, metal deactivator, antistatic agent, pigment, inorganic filler, epoxy compound, adsorption inhibitor and decoloring agent can be added to the organic material. These additives may be added to the organic material simultaneously together with the polyaminotriazine composition of formula(I) or may be compounded in a different step to that of polyaminotriazine.

For compounding polyaminotriazine of formula (I) and other additives used optionally in an organic material, any known methods and apparatus being used to obtain a homogeneous mixture can be used. For example, when the organic material is solid polymer, the polyaminotriazine or an optional additive can be blended in the solid polymer directly, or the polyaminotriazine or an optional additive in a form of master batch can be compounded to the solid polymer. When organic material is synthetic polymer, not only the same methods as mentioned above can be adopted, but also solution or dispersion of the polyaminotriazine or an optional additive can be added to the polymer reaction solution during polymerization or immediately after the completion of polymerization. On the other hand, when the organic material is in liquid form such as oil, the polyaminotriazine or an optional additive can be added thereto directly, or the polyaminotriazine or an optional additive can be added thereto after it was dissolved or suspended in a liquid medium.

The present invention will be illustrated in more detail with a reference to the examples mentioned below. In the example, "%" and "part" is weight basis unless otherwise mentioned.

### Example 1

(a) Preparation of intermediate product
In an autoclave 358g (2.3mol) of 2,2,6,6-tetramethyl-4-piperidone, 139g (1.2mol) of hexamethylenediamine, 700g of methylalcohol and 2g of 5% platina/carbon were charged and the resulting mixture was kept at a hydrogen pressure of 9-10 atom and at a temperature of 60°C for 4 hours. Thereafter, it was kept at 70°C for 1 more hour. After completion of reaction, the reaction solution was filtered to remove catalyst and then methylalcohol was distilled off under an reduced pressure to obtain 460g of concentrated mass. The mass contains 92.4 % of N,N ' -bis(2,2,6,6-tetramethyl-4-piperidyl)hexamethylenediamine and 5.4 % of N-(2,2,6,6-tetramethyl-4-piperidyl)hexamethylenediamine.
(b) Preparation of dichlorotriazine
In a flask, 110 g of water, 202g(1.1mol) of cyanuric chloride and 507 g of xylene were charged. Then, while keeping the temperature at 10°C, 145g(1.1mol) of 1,1,3,3-tetramethylbutylamine was slowly and dropwise added thereto, followed by adding slowly 231g of 20 % aqueous solution of sodium hydroxide. After completion of reaction, oil-water separation was conducted to remove water layer.
(c) Preparation of polyaminotriazine
In the flask equipped with dean-stark trap, whole of the concentrated mass of intermediate prepared in above (a) and 110g(2.75mol) of powdered sodium hydroxide were charged and the resulting mixture was heated to 160°C. Thereafter, whole of the xylene solution of dichlorotriazine prepared in above (b) was dropwise added in a mixture containing the intermediate product mentioned above and sodium hydroxide over 4 hours. While distilling off a part of the xylene and water produced during the reaction, the reaction mixture was kept at 160°C for 5 hours. After completion of the reaction, water was added, to dissolve sodium chloride produced during the reaction, and then the water layer was removed. After the xylene solution was filtered to remove the byproduct, the solution was washed with water thoroughly and concentrated. The fused mass thus obtained was cooled to obtain 631g of solid resin which was then crushed.

| | |
|---|---|
| number average molecular weight : | 5600 |
| chlorine content : | 360 mg/kg |

### Example 2

(a) Preparation of intermediate product
In an autoclave 362g (2.3mol) of 2,2,6,6-tetramethyl-4-piperidone, 139g (1.2mol) of hexamethylenediamine, 700g of methylalcohol and 2g of 5% platina/carbon were charged and the resulting mixture was kept at a hydrogen pressure of 9-10 atom and at a temperature of 60°C for 4 hours. Thereafter, it was kept at 70°C for 1 more hour. After completion of reaction, the reaction solution was filtered to remove catalyst and then methylalcohol was distilled off under an reduced pressure to obtain 464g of concentrated mass. The mass contains 92.4 % of N,N ' -bis(2,2,6,6-tetramethyl-4-piperidyl)hexamethylenediamine and 5.5 % of N-(2,2,6,6-tetramethyl-4-piperidyl)hexamethylenediamine.
(b) Preparation of dichlbrotriazine
Example 1 (b) was repeated to obtain xylene solution of dichlorotriazine.
(c) Preparation of polyaminotriazine
In the flask equipped with dean-stark trap, whole of the concentrated mass of intermediate prepared in (a) in Example 2 and 110g(2.75mol) of powdered sodium hydroxide were charged and the resulting mixture was heated to 160°C. Thereafter, whole of xylene solution of the dichlorotriazine prepared in (b) in Example 2 was dropwise added in a mixture containing the intermediate product mentioned above and sodium hydroxide over 4 hours. While distilling off a part of the xylene and water produced during the reaction, the reaction mixture was kept at 160°C for 5 hours. After completion of the reaction, the reaction mixture was cooled to 140°C and then 400g of xylene was added. Thereafter, 15g(0.12mol) of 1,1,3,3-tetramethylbutylamine was added thereto and the reaction mixture was kept at the temperature for 2 hours. After completion of reaction, water was added to dissolve sodium chloride produced during the reaction, and then the water layer was removed. After the xylene solution was filtered to remove the byproduct, the solution was washed with water one more time and concentrated. The fused mass thus obtained was cooled to obtain 634g of solid resin which was then crushed.

| | |
|---|---|
| number average molecular weight : | 4400 |
| chlorine content : | 70 mg/kg |

### Comparative example

(a) Preparation of intermediate product
In an autoclave 283.8g (1.8mol) of 2,2,6,6-tetramethyl-4-piperidone, 111.9g (0.96mol) of hexamethylenediamine, 600g of methylalcohol and 1.6g of 5% platina/carbon were charged and the resulting mixture was kept at a hydrogen pressure of 9-10 atom and at a temperature of 65°C for 3 hours. Thereafter, it was kept at 70°C for 1 more hour. After completion of reaction, the reaction solution was filtered to remove catalyst and then methylalcohol was distilled off under an reduced pressure to obtain 367g of concentrated mass. The mass contains 94.4 % of N,N'-bis(2,2,6,6-tetramethyl-4-piperidyl)hexamethylenediamine and 5.4 % of N-(2,2,6,6-tetramethyl-4-piperidyl)hexamethylenediamine.
(b) Preparation of dichlorotriazine
In a flask, 90 g of water, 156.9g(0.85mol) of cyanuric chloride and 390 g of xylene were charged. Then, while keeping the temperature at 10°C, 112.5g(0.87mol) of 1,1,3,3-tetramethylbutylamine was slowly and dropwise added thereto, followed by adding slowly 174g of 20 % aqueous solution of sodium hydroxide. After completion of reaction, oil-water separation was conducted to remove the water layer.
(c) Preparation of polyaminotriazine
In the flask equipped with dean-staak trap, whole of the concentrated mass of intermediate prepared in above (a) and 85g(2.1mol) of powdered sodium hydroxide were charged and the resulting mixture was heated to 160°C. Thereafter, whole of xylene solution of the dichlorotriazine prepared in above (b) was dropwise added in a mixture containing the intermediate product mentioned above and sodium hydroxide over 4 hours. While distilling off a part of the xylene and water produced during the reaction, the reaction mixture was kept at 160°C for 5 hours. After completion of the reaction, water was added to dissolve sodium chloride produced during the reaction, and then the water layer was removed. After the xylene solution was filtered to remove the byproduct, the solution was concentrated. The fused mass thus obtained was cooled to obtain 499g of solid resin which was then crushed.

| | |
|---|---|
| number average molecular weight : | 4900 |
| chlorine content : | 1800 mg/kg |

### Application example : Evaluation of weatherability of Polyethylene containing polyaminotriazine

### « Formulation »

| | |
|---|---|
| LLD-PE(Sumikasen FS150A manufactured by Sumitomo Chemical Co., Ltd.) | 100 parts |
| polyaminotriazine composition | 0.2 parts |

According to the above mentioned formulation, the polyaminotriazine composition (powdered solid resin) prepared in the above-mentioned Example 1 or Comparative example was added to the polyethylene, and was mixed with tumbler mixer. The resulting resin mixture was formed to a film having the thickness of 20 µ m with an inflation fabricating machine. The polyethylene film thus obtained was kept spread outdoors. Weatherability was evaluated based on the number of days during which tensile elongation ratio by Tensile test becomes half of initial value. Results are shown in Table 1.

**Table 1**

| Polyaminotriazine | Chlorine content (mg / kg) | Half life period of elongation (days) |
|---|---|---|
| Example 1 | 360 | 250 |
| Comparative example | 1800 | 200 |

Weatherability of organic materials is improved by compounding polyaminotriazine composition in which remaining halogen content was reduced.

## Claims

1. A composition comprising a polyaminotriazine represented by the following formula(I) as its main ingredient: 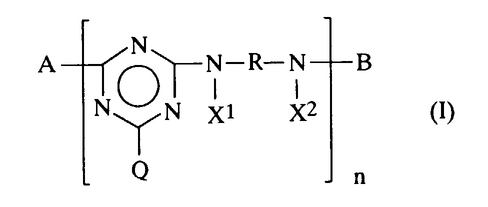 wherein
A represents an end group selected from a group represented by the following formula: 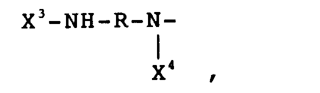 halogen,
a group represented by Q which is defined below, or a hydroxyl group;
B represents hydrogen or an end group represented by one of the following formulae: 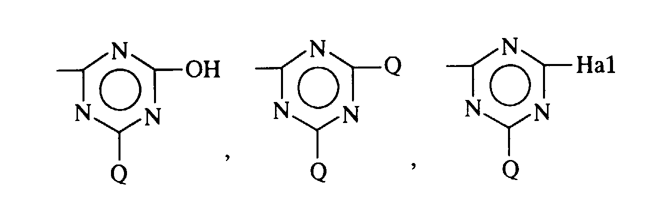 wherein
Hal represents halogen;
n represents a number of from 2 to 20;
X¹, X², X³ and X⁴ each independently represents hydrogen or a piperidyl group represented by the following formula(Ia): 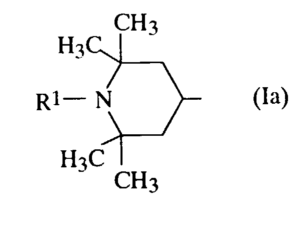 wherein
R¹ represents hydrogen, a hydroxyl group, an alkyl group having 1-12 carbon atoms, an alkoxy group having 1-18 carbon atoms, an alkenyl group having 3-8 carbon atoms, an arylalkyl group having 7-11 carbon atoms or an alkenyloxy group having 3-5 carbon atoms, provided that at least 75 mol % of X¹, X², X³ and X⁴ is the piperidyl group but not all of X¹, X², X³ and X⁴ is the piperidyl group;
R represents an alkylene group having 2-12 carbon atoms which may be interrupted with -O- or -NR²- in which R² represents hydrogen, an alkyl group having 1-12 carbon atoms, a cycloalkyl group having 3-12 carbon atoms or a piperidyl group of the above-mentioned formula(Ia), or
R represents a divalent alicyclic group having 6-15 carbon atoms; and
Q is a group represented by formula of -OR³ or-NR⁴R⁵ in which
R³ represents an alkyl group having 1-12 carbon atoms, a cycloalkyl group having 5-12 carbon atoms, benzil, phenyl, tolyl or a piperidyl group of the above-mentioned formula(Ia),
R⁴ represents an alkyl group having 1-12 carbon atoms, cyclohexyl, and
R⁵ represents an alkyl group having 1-12 carbon atoms, an alkoxyalkyl group having 3-12 carbon atoms in total, an N,N-dialkylaminoalkyl group having 4-12 carbon atoms in total, an alkenyl group having 3-5 carbon atoms, cyclohexyl, benzyl, phenyl, tolyl or a piperidyl group of the above-mentioned formula(Ia), or
R⁴ and R⁵, together with the nitrogen atom to which they are connected, form a heterocyclic ring which may contain - O- or-NH-; and
halogen in an amount of 1000mg or less per 1 kg of the composition.

2. A composition according to Claim 1 wherein R¹ is hydrogen or methyl, R is alkylene having 4-12 carbon atoms and Q is -NHR⁵, in which R⁵ is as defined in Claim 1, or Q is morpholino.

3. A composition according to Claim 2 wherein R¹ is hydrogen, R is hexamethylene and Q is 1,1,3,3-tetramethylbutylamino.

4. A composition according to any one of Claims 1-3 wherein the amount of the halogen is 500mg or less of per 1 kg of the composition.

5. A weather stabilizer for an organic material which comprises a composition according to any one of Claims 1-4.

6. A stabilized organic material comprising a composition according to any one of Claims 1 to 5.
